# EUROPÄISCHE PATENTSCHRIFT

(11) **EP 0 378 274 B1**
(45) Veröffentlichungstag und Bekanntmachung des Hinweises auf die Patenterteilung: **22.11.1995**
(21) Anmeldenummer: 90200049.6
(22) Anmeldetag: 09.01.1990
(51) Int. Cl.: H01J 35/10, F16C 33/10

(54) **Drehanoden-Röntgenröhre mit wenigstens zwei Spiralrillenlagern**
Rotary anode X-ray tube with at least two spirally grooved bearings
Tube à rayons X à anode tournante comprenant au moins deux paliers à rainures spirales

(30) Priorität: 12.01.1989 DE 3900730
(43) Veröffentlichungstag der Anmeldung: 18.07.1990
(73) Patentinhaber: Philips Patentverwaltung GmbH, 22335 Hamburg (DE); Philips Electronics N.V., 5621 BA Eindhoven (NL)
(72) Erfinder: Vetter, Axel, D-2000 Hamburg 65 (DE)
(74) Vertreter: Hartmann, Heinrich, Dipl.-Ing.

(56) Entgegenhaltungen:
- EP-A- 0 117 873
- EP-A- 0 141 475
- PATENT ABSTRACTS OF JAPAN vol. 8, no. 104 (M-296)(1541) 16 Mai 1984, & JP-A- 59 17018

## Beschreibung

Die Erfindung betrifft eine Drehanoden-Röntgenröhre nach dem Oberbegriff des Anspruchs 1. Eine solche Drehanoden-Röntgenröhre ist aus der DE-OS 28 52 908 bekannt. Beiderseits der Anodenscheibe ist dabei je ein Spiralrillenlager zur axialen und radialen Lagerung der Drehanode vorgesehen. Für jedes der beiden Spiralrillenlager müssen dabei Vorkehrungen getroffen werden, um zu verhindern, daß austretende Schmiermitteltropfen die Hochspannungsfestigkeit der Drehanoden-Röntgenröhre gefährden und daß im Falle eines Schmiermittelverlustes die Lager beschädigt werden.

Der Erfindung liegt daher die Aufgabe zugrunde, eine Lageranordnung für eine Drehanoden-Röntgenröhre mit wenigstens zwei Spiralrillenlagern in unmittelbarer räumlicher Nachbarschaft zu schaffen.

Diese Aufgabe wird erfindungsgemäß durch die im Anspruch 1 angegebenen Maßnahmen gelöst.

Räumlich eng benachbarte Spiralrillenlager stehen über einen Schmiermittelfilm miteinander in Wechselwirkung. Dies kann dazu führen, daß das eine Spiralrillenlager dem anderen Schmiermittel entzieht - insbesondere in der Start- oder der Landephase - was einen Lagerschaden zur Folge haben kann. Solche Lagerschäden werden bei der Erfindung dadurch vermieden, daß der Abstand zwischen den einander zugewandten Flächen der Lagerteile im Grenzbereich zwischen den Spiralrillenlagern ein Vielfaches, vorzugsweise mindestens das fünffache, dieses Abstandes im Bereich der Spiralrillenlager selbst ist. Die Druck- und Sogwirkungen des einen Lagers bewirken in dem relativ großen Schmiermittelvolumen im Grenzbereich nur noch geringe Flüssigkeitsbewegungen, die das andere Spiralrillenlager praktisch nicht mehr beeinflussen.

Die Erfindung wird nachstehend anhand der Zeichnung näher erläutert. Es zeigen
Fig. 1 eine erfindungsgemäße Drehanoden-Röntgenröhre und
Fig. 2 die Drehanode einer solchen Röntgenröhre in einem vergrößerten Maßstab.

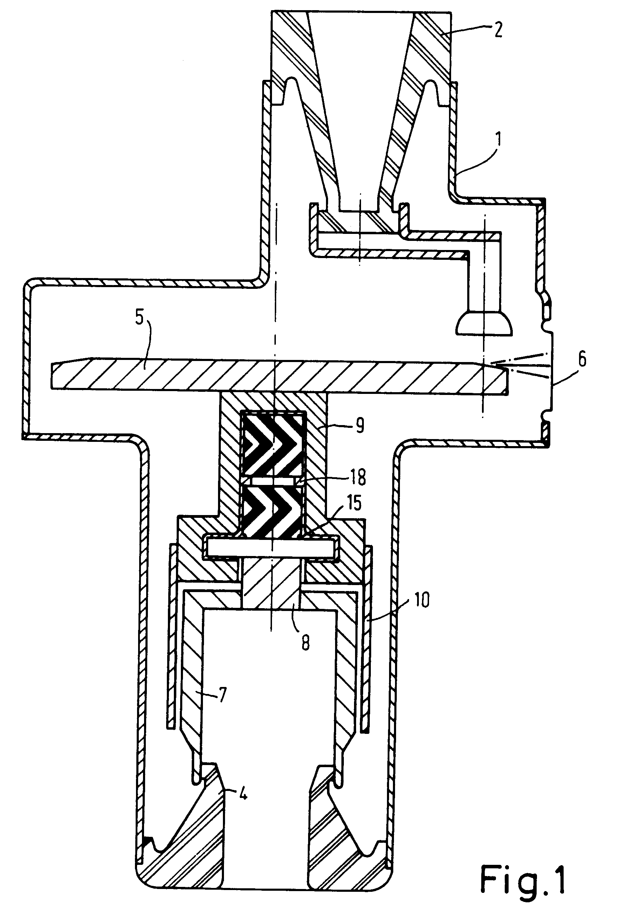

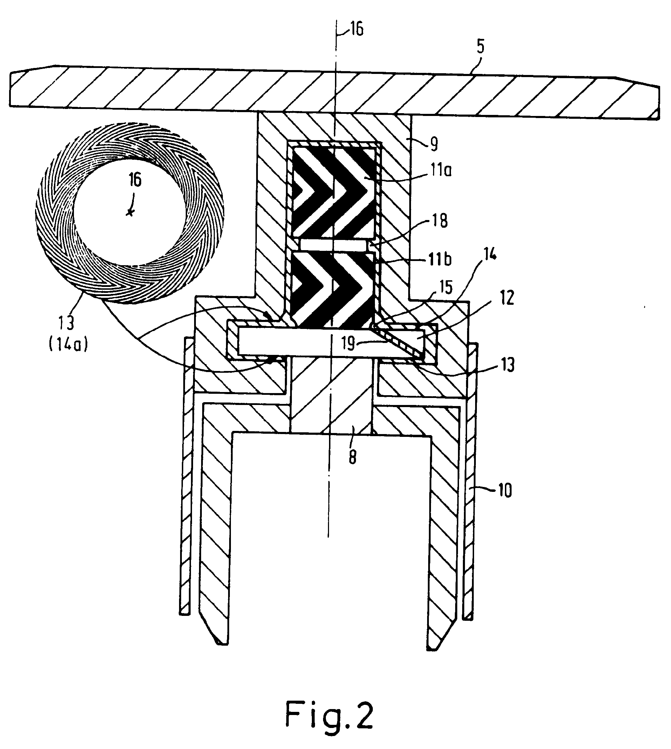

Die in Fig. 1 dargestellte Drehanoden-Röntgenröhre besitzt einen Metallkolben 1, an dem über einen ersten Isolator 2 die Kathode und über einen zweiten Isolator 4 die Drehanode befestigt ist. Die Drehanode besitzt eine Anodenscheibe 5, auf deren der Kathode 3 gegenüberliegenden Fläche beim Einschalten einer Hochspannung Röntgenstrahlung erzeugt wird, die durch ein Strahlenaustrittsfenster 6 im Kolben 1, das vorzugsweise aus Beryllium besteht, austritt. Die Anodenscheibe 5 ist über eine Lageranordnung mit einem Trägerkörper 7 verbunden, der an dem zweiten Isolator 4 befestigt ist. Wie sich insbesondere aus Fig. 2 ergibt, umfaßt die Lageranordnung eine fest mit dem Träger verbundene Lagerachse 8 und eine die Lagerachse 8 konzentrisch umschließende Lagerschale 9, die an ihrem unteren Ende einen Rotor 10 zum Antrieb der am oberen Ende befestigten Anodenscheibe 5 aufweist. Die Lagerachse 8 und die Lagerschale 9 bestehen aus einer Molybdänlegierung (TZM). Stattdessen kann aber auch Molybdän oder eine Wolfram-Molybdänlegierung verwendet werden.

An ihrem oberen Ende ist die Lagerachse 8 mit zwei in axialer Richtung gegeneinander versetzten fischgrätartigen Rillenmustern 11a, 11b versehen. Die Rillen sind z.B. 10 um tief und die Flächen der Rillen stehen zu den dazwischenliegenden Flächen vorzugsweise im Verhältnis 1 : 1. Der Zwischenraum zwischen den Rillenmustern 11a, 11b und der Lagerschale 9 ist mit einem flüssigen Schmiermittel gefüllt, vorzugsweise einer Galliumlegierung (GaInSn). Die mit den Rillenmustern 11a, 11b versehenen Flächen der Achse 8 und die ihm gegenüberliegenden Flächen der Lagerschale 9 bilden somit zwei Spiralrillenlager zur Aufnahme der radialen Lagerkräfte.

Im Anschluß an das untere das Rillenmuster 11b umfassende Spiralrillenlager hat die Lagerachse 8 einen mehrere Millimeter dicken Abschnitt 12, dessen Durchmesser wesentlich größer ist als der Durchmesser des übrigen Teils der Lagerachse 8. Darunter folgt wiederum ein Abschnitt, dessen Durchmesser - zumindest annähernd - dem Durchmesser der Lagerachse 8 im oberen Bereich entspricht, und der mit dem Trägerkörper 7 verbunden ist. Die Innenkontur der Lagerschale 9 ist der Außenkontur der Lagerachse 8 angepaßt; infolgedessen ist die Lagerschale nicht einteilig ausgebildet, wie in der Zeichnung dargestellt, sondern sie besteht aus mindestens zwei Teilen, die im Bereich des Abschnitts 12 auf geeignete Weise so miteinander verbunden sind, daß das Schmiermittel durch die Verbindungsbereiche nicht austreten kann.

Die zur Rotationsachse 16 der Lagerschale 9 senkrecht verlaufenden Stirnflächen 13, 14 des Abschnitts 12 sind ebenfalls mit einem fischgrätartigen Muster 13a, 14a - in Fig. 2 gesondert dargestellt - versehen und bilden zusammen mit den dazu parallelen Flächen der Lagerschale 9 zwei weitere Spiralrillenlager, die axial nach oben und nach unten gerichtete Kräfte auf die Drehanode aufnehmen können.

Wenn bei horizontal verlaufender Rotationsachse 16 die Anodenscheibe rotiert, ergeben sich in den Spiralrillenlagern mit den Rillenmustern 11a und 11b, die die radialen Kräfte aufnehmen, bezüglich des Umfangs unsymmetrische Druckverteilungen, während bei den axial wirkenden Spiralrillenlagern mit den Rillenmustern 13a, 14a sich eine rotationssymmetrische Druckverteilung einstellt. Diese unterschiedlichen Druck- und Sogwirkungen bewirken im Grenzbereich zwischen den aneinander grenzenden Spiralrillenlagern (11b, 14a) eine Schmiermittelströmung, die zu Schmiermittelmangelsituationen führt - insbesondere beim Start- und bei der Landung der Spiralrillenlager. Die Folge davon sind Beschädigungen der Lagerflächen.

Diese Schmiermittelbewegungen zwischen den Spiralrillenlagern werden dadurch weitgehend unterdrückt, daß die Lager voneinander entkoppelt werden. Zu diesem Zweck ist die Achse 8 in dem Grenzbereich zwischen den Spiralrillenlagern 11b und 14a mit einer umlaufenden Vertiefung (Rezeß) 15 versehen, einem sogenannten "Freistich". Die gegenüber dem Rezeß 15 befindliche Kante der Lagerschale 9 ist abgerundet bzw. abgeschrägt.

Während der Abstand zwischen der Außenfläche des Lagers 8 und der Innenfläche der Lagerschale 9 im Bereich der Spiralrillenlager 11a, 11b typischerweise bei etwa 20 µ liegt, ergibt sich durch den Rezeß und durch die Abrundung ein Abstand, der vorzugsweise mindestens fünfmal größer ist und z.B. 1-3 mm beträgt. Die Rezeß-Abmessungen in axialer Richtung sind in der gleichen Größe. (Die Zeichnung stellt diese Abstände nicht maßstabsgerecht dar). Das in diesem Grenzbereich zwischen dem radialen Spiralrillenlager 11b und den axialen Spiralrillenlagern befindliche Schmiermittel entkoppelt diese beiden Lager voneinander, d.h. daß beispielsweise die Druck- und Sogwirkung des Lagers 11b das Axiallager praktisch nicht mehr beeinflußt, weil sie in diesem Grenzbereich nur noch geringe Schmiermittelbewegungen hervorruft.

Auch zwischen zwei benachbarten radialen Spiralrillenlagern ergeben sich die geschilderten Probleme, weil sie aufgrund mechanischer Toleranzen nie absolut gleichartige Druckverhältnisse aufbauen. Es besteht daher auch hier die Gefahr, daß eines der beiden miteinander in Schmiermittelkonkurrenz befindlichen Spiralrillenlager dem anderen Schmiermittel entzieht. Diese Gefahr wird dadurch unterbunden, daß zwischen den beiden Spiralrillenlagern in der Lagerachse ein Rezeß 18, dessen Tiefe vorzugsweise mindestens das fünffache des Lagerspalts beträgt (0,1 mm), vorzugsweise 1 mm, und der z.B. 5 mm breit ist, vorgesehen ist. Der Rezeß könnte auch in der Wand der Lagerschale vorgesehen sein, oder es können sowohl in der Lagerschale als auch in der Lagerachse je ein Rezeß (in gleicher axialer Position) vorgesehen sein. Der Rezeß verhindert auch hier, daß das eine Spiralrillenlager das andere beeinflußt.

Die Mantelfläche des Abschnitts 12 mit vergrößertem Durchmesser hat von der zugehörigen Innenfläche der Lagerschale einen Abstand, der beispielsweise 0,5 mm beträgt. Dadurch werden die beiden Spiralrillenlager 13a und 14a voneinander entkoppelt und es wird ein Schmiermittelreservoir 17 gebildet, das gegebenenfalls Schmiermittelverluste durch aus der Lageranordnung 8, 9 austretendes Schmiermittel ausgleichen kann. Überdies verringert der vergrößerte Abstand die Reibungskräfte. Bei einer Relativverschiebung zwischen Lagerachse 8 und Lagerschale 9 in axialer Richtung muß Schmiermittel von dem einen axialen Spiralrillenlager zum anderen transportiert werden. Dies wird durch die engen Spalte zwischen den Lagerteilen 8, 9 erheblich erschwert, insbesondere bei rotierender Anode 5, so daß es bei heftigen Stößen in axialer Richtung zu Kavitationen kommen kann. Diese lassen sich durch mindestens eine hinreichend dicke Bohrung 19 von z.B. 0,6 mm Durchmesser vermeiden, die den innersten Rand des Spiralrillenlagers 14 bzw. den Rezeß 15 und den äußeren Rand des Spiralrillenlagers 13 bzw. das Reservoir miteinander verbindet. In der Bohrung muß das Schmiermittel durch Kapillarkräfte gehalten werden; der Durchmesser der Bohrung darf daher nicht zu groß werden. Bei einer Verschiebung in axialer Richtung strömt das Schmiermittel leicht von dem einen Spiralrillenlager zum anderen durch die Bohrung 19 hindurch.

## Patentansprüche

1. Drehanoden-Röntgenröhre mit einer wenigstens zwei Spiralrillenlager umfassenden Lageranordnung für die Drehanode,
dadurch gekennzeichnet, daß die Spiralrillenlager (11a, 11b, 14a) einen rotierenden und einen feststehenden Teil (9, 8) gemeinsam haben und daß zur Entkopplung räumlich eng benachbarter Spiralrillenlager (11b, 14a) die Oberfläche des rotierenden und/oder des feststehenden Lagerteiles (8, 9) so geformt ist, daß der Abstand zwischen den einander zugewandten Oberflächen im Grenzbereich zwischen den Spiralrillenlagern ein Vielfaches dieses Abstandes im Bereich der Spiralrillenlager ist, so daß die Spiralrillenlager voneinander entkoppelt sind.

2. Drehanoden-Röntgenröhre nach Anspruch 1,
dadurch gekennzeichnet, daß die Lageranordnung einen inneren Lagerteil (8) umfaßt, der wenigstens zwei Abschnitte unterschiedlichen Durchmessers aufweist, wobei die Stirnfläche und die Mantelflächen an der Übergangsstelle Teil eines Axial- bzw. Radialspiralrillenlagers ist, daß der äußere Lagerteil (9) mit seiner Innenkontur an die Außenkontur des inneren Lagerteils angepaßt ist und daß im Bereich der Übergangsstelle ein Rezeß (15) oder eine Abschrägung bzw. eine Abrundung vorgesehen ist.

3. Drehanoden-Röntgenröhre nach Anspruch 2,
dadurch gekennzeichnet, daß auf einem der Abschnitte, in dem die Lagerteile einen konstanten Innen- bzw. Außendurchmesser aufweisen, zwei radiale Spiralrillenlager (11a, 11b) vorgesehen sind, und daß dazwischen ein Rezeß (18) in dem inneren oder dem äußeren Lagerteil vorgesehen ist.

4. Drehanoden-Röntgenröhre nach Anspruch 2,
dadurch gekennzeichnet, daß die beiden Stirnflächen des Abschnitts mit dem größeren Durchmesser als je ein axiales Spiralrillenlager 9 wirken, und daß eine Bohrung (19) vorgesehen ist, die den Rezeß (15) mit dem anderen Spiralrillenlager (13) verbindet.

## Claims

1. A rotary-anode X-ray tube comprising a bearing arrangement for the rotary anode having at least two spiral groove bearings, characterized in that the spiral groove bearings (11a, 11b, 14a) have in common a rotating part and a stationary part (9, 8) and that for the decoupling of spatially closely adjacent spiral groove bearings (11b, 14a) the surface of the rotating bearing part and/or of the stationary bearing part (8, 9) is formed so that the distance between the facing surfaces in the boundary region between the spiral groove bearings is a multiple of this distance in the region of the spiral groove bearings, so that the spiral groove bearings are decoupled from one another.

2. A rotary-anode X-ray tube as claimed in Claim 1, characterized in that the bearing arrangement has an inner bearing part (8) which has at least two section of different diameter, the end face and the outer surfaces at the transitional area forming part of an axial or radial spiral groove bearing, that the inner contour of the outer bearing part (9) is adapted to the outer contour of the inner bearing part, and that in the transitional area there is formed a recess (15) or a bevelled part or a rounded part.

3. A rotary-anode X-ray tube as claimed in Claim 2, characterized in that two radial spiral groove bearings (11a, 11b) are provided on one of the sections in which the bearing parts have a constant inner or outer diameter, and that a recess (18) is provided there between in the inner or the outer bearing part.

4. A rotary-anode X-ray tube as claimed in Claim 2, characterized in that each of the two end faces of the section of larger diameter acts as an axial spiral groove bearing (9), and that there is provided a bore (19) which connects the recess (15) to the other spiral groove bearing (13).

## Revendications

1. Tube à rayons X à anode tournante avec un arrangement de paliers, pour l'anode tournante, comprenant au moins deux paliers à rainures spirales, caractérisé en ce que les paliers à rainures spirales (11a, 11b, 14a) ont en commun une pièce tournante et une pièce fixe (9, 8) et que, pour désaccoupler les paliers à rainures spirales contigus (11b, 14a), la surface de la pièce de palier tournante et/ou de la pièce de palier fixe (8, 9) est formée de façon telle que l'écart prévu entre les surfaces se faisant face dans la zone limite entre les paliers à rainures spirales soit un multiple de cet écart dans la zone des paliers à rainures spirales, de telle sorte que les paliers à rainures spirales sont désaccouplés l'un de l'autre.

2. Tube à rayons X à anode tournante suivant la revendication 1, caractérisé en ce que l'arrangement de paliers comprend une pièce de palier interne (8), qui présente au moins deux sections de diamètres différents, la face d'about et les surfaces latérales au niveau de la transition faisant partie d'un palier à rainures spirales axial ou radial, que la pièce de palier externe (9) est adaptée par son contour interne au contour externe de la pièce de palier interne et que dans la zone de transition, une gorge (15) ou un chanfrein ou arrondi est prévu.

3. Tube à rayons X à anode tournante suivant la revendication 2, caractérisé en ce que, sur une des sections, dans laquelle les pièces de palier présentent un diamètre intérieur ou extérieur constant, deux paliers à rainures spirales radiaux (11a, 11b) sont prévus, et qu'entre ces deux paliers, une gorge (18) est prévue dans la pièce de palier interne ou externe.

4. Tube à rayons X à anode tournante suivant la revendication 2, caractérisé en ce que les deux surfaces d'about de la section de plus grand diamètre agissent chacune comme un palier à rainures spirales axial (9), et qu'un canal (19) est prévu, qui raccorde la gorge (15) avec l'autre palier à rainures spirales (13).
